# EUROPEAN PATENT APPLICATION

(11) **EP 4 358 552 A1**
(43) Date of publication of application: **24.04.2024**
(21) Application number: 22824088.3
(22) Date of filing: 06.06.2022
(51) Int. Cl.: H04W 4/24

(54) **BILLING METHOD, USER EQUIPMENT AND NETWORK-SIDE DEVICE**

(30) Priority: 17.06.2021 CN 202110671716
(71) Applicant: Datang Mobile Communications Equipment Co., Ltd., Beijing 100085 (CN)
(72) Inventor: SHU, Min, Beijing 100085 (CN); DENG, Qiang, Beijing 100085 (CN); DUAN, Xiaoyan, Beijing 100085 (CN)
(74) Representative: Studio Torta S.p.A.
(86) International application number: PCT/CN2022/097142
(87) International publication number: WO 2022/262608

(57) **Abstract**

The present application provides a charging method, a user equipment and a network-side equipment. The method comprises: acquiring, by a user equipment, charging information of a quality of service (QoS) flow, wherein the charging information is generated based on a proximity based service provided by the user equipment; and transmitting the charging information to a network-side equipment, wherein the charging information comprises flow information of the QoS flow.

## Description

### CROSS-REFERENCE TO RELATED APPLICATION

The present application claims a priority to Chinese Patent Application No. 202110671716.4 filed on June 17, 2021, the whole content of which is incorporated by reference herein in its entirety.

### TECHNICAL FIELD

The present application relates to the field of communications technology, in particular to a charging method, a user equipment and a network-side equipment.

### BACKGROUND

Proximity based services (Proximity based Services, ProSe) refers to a wireless communications technology that enables direct connection and communication by using ProSe when user equipment (User Equipment, UE) are in proximity to each other. It can allow direct communications between new radio (New Radio, NR)/long term evolution (Long Term Evolution, LTE) UEs by using cellular radio resources under the control of a cellular communication system, without transfer through a cellular network.

With the deployment of service based architecture (Service Based Architecture, SBA) in a core network of 5^{th} generation mobile communication technology (5th-Generation, 5G), a charging system has evolved to a converged charging system (Converged Charging System, CCS), which integrates online and offline charging functions and provides a unified interface externally by adopting the service based architecture.

However, in ProSe scenarios, how to accurately charge for the occurring ProSe has become an important issue that urgently needs to be addressed.

### SUMMARY

The present application is to provide a charging method, a user equipment and a network-side equipment, to address a charging issue in ProSe scenarios.

An embodiment of the present application provides a charging method, which includes:
acquiring, by a user equipment, charging information of a quality of service (QoS) flow, where the charging information is generated based on a proximity based service (ProSe) provided by the user equipment; and
transmitting the charging information to a network-side equipment,
where the charging information includes flow information of the QoS flow.

Optionally, the acquiring the charging information of the quality of service (QoS) flow includes:
acquiring the charging information of the QoS flow based on a charging trigger event; or,
triggering to acquire the charging information of the QoS flow based on configuration information.

Optionally, the charging trigger event includes at least one or more of the following:
establishment of a ProSe link;
establishment of the QoS flow;
change in a QoS attribute parameter;
a time condition of the ProSe link, where the time condition of the ProSe link is used to represent that a charging event is triggered in a case that a set time is met within a life period of the ProSe link;
a data volume condition of the ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the method further includes: after acquiring the charging information, generating a usage information report including the charging information according to a collection period for generating the usage information report included in configuration information. The transmitting the charging information to the network-side equipment includes: transmitting the usage information report to the network-side equipment according to a reporting period in the configuration information.

Optionally, the transmitting the charging information to the network-side equipment includes: transmitting the charging information to a charging trigger function (Charging Trigger Function, CTF) or a charging enablement function (Charging Enablement Function, CEF) of the network-side equipment, where the charging information is forwarded to a CHF by the CTF or the CEF, and the charging information is used for the CHF to charge for the ProSe that occurs.

Optionally, the transmitting the charging information to the CEF of the network-side equipment specifically includes: transmitting the charging information to the CEF of the network-side equipment through a charging related network function (Network Function, NF) service.

Optionally, the flow information of the QoS flow includes at least one or more of the following:
a QoS attribute parameter;
a QoS characteristic parameter;
a QoS flow identifier PFI (PC5 QoS Flow Identifier, PFI);
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP (Internet Protocol, IP) address;
a target IP address;
a relay IP address;
an IP multicast address of a ProSe group;
an identifier of a device participating in the ProSe;
a link identifier of a ProSe link.

An embodiment of the present application provides a charging method, which includes: acquiring, by a network-side equipment, charging information of a QoS flow transmitted by a user equipment, where the charging information is generated based on a proximity based service (ProSe) provided by the user equipment; and transmitting the charging information to a charging function (Charging Function, CHF), where the charging information includes flow information of the QoS flow.

Optionally, before acquiring the charging information of the QoS flow transmitted by the user equipment, the method further includes: configuring configuration information about the charging information for the user equipment.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the acquiring the charging information of the QoS flow transmitted by the user equipment includes: acquiring a usage information report transmitted by the user equipment according to a reporting period of the charging information, where the usage information report includes the charging information.

Optionally, the transmitting the charging information to the charging function (CHF) includes: transmitting the charging information to the CHF through a charging trigger function (CTF) or a charging enablement function (CEF) by using a service-based interface exhibited by charging function (Service-based interface exhibited by Charging Function, Nchf), where the charging information is used for the CHF to charge for the ProSe that occurs.

Optionally, the receiving the charging information transmitted by the user equipment to the charging enablement function (CEF) includes: receiving the charging information transmitted by the NF service to the CEF. The charging information is transmitted by the user equipment to the NF service.

Optionally, the flow information of the QoS flow includes at least one or more of the following:
a QoS parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

An embodiment of the present application provides a user equipment, including: a memory, a transceiver and a processor, where the memory is configured to store a computer program; the transceiver is configured to transmit and receive data under control of the processor; and the processor is configured to read the computer program in the memory to perform the following operation: acquiring charging information of a QoS flow, where the charging information is generated based on a proximity based service (ProSe) provided by the user equipment; the transceiver is configured to transmit the charging information to a network-side equipment, where the charging information includes flow information of the QoS flow.

Optionally, the processor is configured to read the computer program in the memory to perform following operations: acquiring the charging information of the QoS flow based on a charging trigger event; or, triggering to acquire the charging information of the QoS flow based on configuration information.

Optionally, the charging trigger event includes at least one or more of the following:
establishment of a ProSe link;
establishment of the QoS flow;
change in a QoS attribute parameter;
a time condition of a ProSe link, where the time condition of the ProSe link is used to represent that a charging event is triggered in a case that a set time is met within a life period of the ProSe link;
a data volume condition of a ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the processor is further configured to read the computer program in the memory to perform the following operations: after acquiring the charging information, generating a usage information report including the charging information according to a collection period for generating the usage information report included in configuration information. The transmitting, by the transceiver, the charging information to the network-side equipment includes: transmitting the usage information report to the network-side equipment according to a reporting period in the configuration information.

Optionally, the transmitting, by the transceiver, the charging information to the network-side equipment includes: transmitting the charging information to a charging trigger function (CTF) or a charging enablement function (CEF) of the network-side equipment, where the charging information is forwarded to a CHF by the CTF or the CEF, where the charging information is used for the CHF to charge for the ProSe that occurs.

Optionally, the transmitting, by the transceiver, the charging information to the CEF of the network-side equipment specifically includes: transmitting the charging information to the CEF of the network-side equipment through a charging related network function (NF) service.

Optionally, the flow information of the QoS flow includes at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

An embodiment of the present application provides a network-side equipment, including: a memory, a transceiver and a processor, the memory is configured to store a computer program; the transceiver is configured to transmit and receive data under control of the processor; and the processor is configured to read the computer program. The transceiver is configured to perform the following operations:
acquiring charging information of a QoS flow transmitted by a user equipment, where the charging information is generated based on a proximity based service (ProSe) provided by the user equipment; and
transmitting the charging information to a charging function (CHF), where the charging information includes flow information of the QoS flow.

Optionally, the processor is further configured to read the computer program in the memory to perform following operations: configuring configuration information about the charging information for the user equipment.

Optionally, the charging trigger event includes at least one or more of the following:
establishment of a ProSe link;
establishment of the QoS flow;
change in a QoS attribute parameter;
a time condition of a ProSe link, where the time condition of the ProSe link is used to represent that a charging event is triggered in a case that a set time is met within a life period of the ProSe link;
a data volume condition of a ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the acquiring, by the transceiver, the charging information of the QoS flow transmitted by the user equipment includes: acquiring a usage information report transmitted by the user equipment according to a reporting period of the charging information, where the usage information report includes the charging information.

Optionally, when transmitting the charging information to the charging function (CHF), the transceiver is specifically configured to: receive the charging information transmitted by the user equipment to a charging trigger function (CTF) or a charging enablement function (CEF). The transmitting, by the transceiver, the charging information to the charging function (CHF) includes: transmitting the charging information to the CHF through the CTF or the CEF by using a service-based interface exhibited by charging function (Nchf), where the charging information is used for the CHF to charge for the ProSe that occurs.

Optionally, the receiving, by the transceiver, the charging information transmitted by the user equipment to the charging enablement function (CEF) includes: receiving the charging information transmitted by a NF service to the CEF, where the charging information is transmitted by the user equipment to the NF service.

Optionally, the flow information of the QoS flow includes at least one or more of the following:
a QoS attribute parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

An embodiment of the present application provides a charging apparatus, which includes: a first acquiring unit, configured to acquire charging information of a quality of service (QoS) flow, where the charging information is generated based on a proximity based service (ProSe) provided by a user equipment; and a first transmitting unit, configured to transmit the charging information to a network-side equipment, where the charging information includes flow information of the QoS flow.

Optionally, the first acquiring unit is specifically configured to acquire the charging information of the QoS flow based on a charging trigger event; or, trigger to acquire the charging information of the QoS flow based on configuration information.

Optionally, the charging trigger event includes at least one or more of the following:
establishment of a ProSe link;
establishment of the QoS flow;
change in a QoS attribute parameter;
a time condition of a ProSe link, where the time condition of the ProSe link is used to represent that a charging event is triggered in a case that a set time is met within a life period of the ProSe link;
a data volume condition of a ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the apparatus further includes a report generation unit, configured to: generate, after acquiring the charging information, a usage information report including the charging information according to a collection period for generating the usage information report included in configuration information. The first transmitting unit is specifically configured to transmit the usage information report to the network-side equipment according to a reporting period in the configuration information.

Optionally, the first transmitting unit includes: a first transmitting subunit configured to transmit the charging information to a charging trigger function (Charging Trigger Function, CTF) or a charging enablement function (Charging Enablement Function, CEF) of the network-side equipment, where the charging information is forwarded to a CHF by the CTF or the CEF, and the charging information is used for the CHF to charge for the ProSe that occurs.

Optionally, the first transmitting subunit is specifically configured to: transmit the charging information to the CEF of the network-side equipment through a charging related network function (NF) service.

Optionally, the flow information of the QoS flow includes at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

An embodiment of the present application provides a charging apparatus, which includes: a second acquiring unit, configured to acquire charging information of a QoS flow transmitted by a user equipment, where the charging information is generated based on a proximity based service (ProSe) provided by the user equipment; and a second transmitting unit, configured to transmit the charging information to a charging function (CHF), where the charging information includes flow information of the QoS flow.

Optionally, the apparatus further includes a configuration unit, configured to: configure configuration information about the charging information for the user equipment, before acquiring the charging information of the QoS flow transmitted by the user equipment.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the second acquiring unit is specifically configured to acquire a usage information report transmitted by the user equipment according to a reporting period of the charging information, where the usage information report includes the charging information.

Optionally, the second acquiring unit specifically includes a first reception subunit, configured to receive the charging information transmitted by the user equipment to a charging trigger function (CTF) or a charging enablement function (CEF). The second transmitting unit is specifically configured to transmit the charging information to the CHF through the CTF or the CEF by using a service-based interface exhibited by charging function (Nchf), where the charging information is used for the CHF to charge for the ProSe that occurs.

Optionally, the first reception subunit is specifically configured to: receive the charging information transmitted by a NF service to the CEF, where the charging information is transmitted by the user equipment to the NF service.

Optionally, the flow information of the QoS flow includes at least one or more of the following:
a QoS attribute parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

An embodiment of the present application provides a processor readable storage medium, where the processor readable storage medium stores a computer program, and the computer program is configured to be executed by a processor to perform steps in the above charging method.

The above technical solution in the present application has the following beneficial effects. In embodiments of the present application, UE acquires charging information of a QoS flow in a ProSe scenario and reports it to network-side equipment. The UE acquires flow information of the QoS flow included by the charging information of the QoS flow. In such way, after it is reported to the network-side equipment, the network-side equipment reports the charging information to CHF, so as to complete the charging. This solution can achieve the charging based on data of ProSe services, and can satisfy charging scenarios of various potential vertical services in ProSe.

### BRIEF DESCRIPTION OF THE DRAWINGS

FIG. 1 shows a first schematic diagram of ProSe 5G charging architecture using the service-based interface;
FIG. 2 shows a second schematic diagram of ProSe 5G charging architecture using the service-based interface;
FIG. 3 shows a first schematic diagram of ProSe charging architecture in 4G (the 4^{th} Generation mobile communication technology, 4G) direct communication based on PCS;
FIG. 4 shows a second schematic diagram of ProSe charging architecture in 4G direct communication based on PCS;
FIG. 5 shows a schematic diagram of a basic charging process for direct communication;
FIG. 6 shows a first schematic flow chart of a charging method according to an embodiment of the present application;
FIG. 7 shows a second schematic flow chart of a charging method according to an embodiment of the present application;
FIG. 8 shows a third schematic flow chart of a charging method according to an embodiment of the present application;
FIG. 9 shows a fourth schematic flow chart of a charging method according to an embodiment of the present application;
FIG. 10 shows a schematic diagram of a L3 relay architecture according to an embodiment of the present application;
FIG. 11 shows a fifth schematic flow chart of a charging method according to an embodiment of the present application;
FIG. 12 shows a sixth schematic flow chart of a charging method according to an embodiment of the present application;
FIG. 13 shows a first schematic structural diagram of a charging apparatus according to an embodiment of the present application;
FIG. 14 shows a second schematic structural diagram of a charging apparatus according to an embodiment of the present application;
FIG. 15 shows a schematic structural diagram of a user equipment according to an embodiment of the present application; and
FIG. 16 shows a schematic structural diagram of a network-side equipment according to an embodiment of the present application.

### DETAILED DESCRIPTION

In order to make a to-be-solved technical problem, a technical solution, and advantages of the present application clearer, a detailed description will be given below in conjunction with the accompanying drawings and specific embodiments. In the following description, specific details such as specific configurations and components are provided merely to assist in a comprehensive understanding of the embodiments of the present application. Therefore, those skilled in the art should be appreciated that various changes and modifications can be made to the embodiments described herein without departing from the scope and spirit of the present application. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present application. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present application, it should be appreciated that the size of a sequence number of each of the following processes does not imply the order of execution, and the execution order of each process should be determined based on the function and internal logic of the each process, which should not constitute any limitations on the implementation process of the present application.

The term "and/or" in the embodiments of the present application describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present application refers to two or more, the similar applies to other quantifiers.

The technical solution of embodiments of the present application will be clearly and completely described hereinafter in conjunction with the accompanying drawings. Apparently, the described embodiments merely relate to a part of, rather than all of, the embodiments of the present application, and based on these embodiments, a person of ordinary skill in the art may, without any creative effort, acquire other embodiments, which also fall within the scope of the present application.

In the description of the embodiments of the present application, some of the concepts used in the following description are explained firstly.

### 1. CCS:

Online charging and offline charging functions are converged and a service based architecture is adopted to provide a unified interface externally. In addition to conventional charging models (such as traffic, duration and event), a 5G converged charging system also supports multi-dimensional charging, which uses charging models based on factors such as uplink and downlink rates, latency, a vertical industry application, a specific service (ultra high-definition video and live streaming) and a device (a tracking device and a sensor) for traffic and other services. The main charging methods include flow based charging (Flow Based Charging, FBC) trigger and quality of service (Quality of Service, QoS) flow based charging (QoS flow Based Charging, QBC) trigger.

### 2. ProSe 5G charging architecture using service based interface:

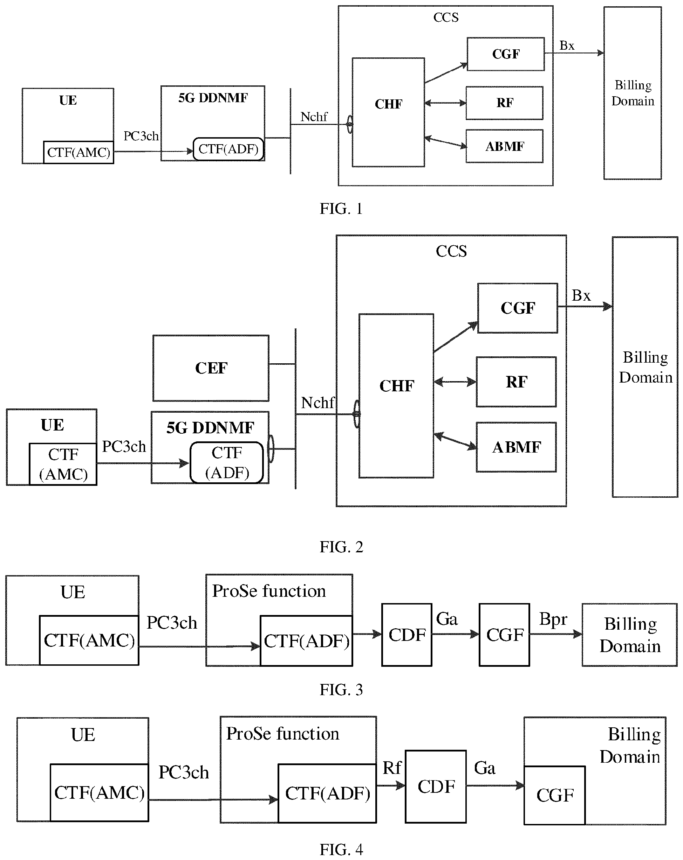

For the 5G service-based architecture of ProSe direct communication (Direct Communication), as shown in FIG. 1 and FIG. 2, charging trigger function (Charging trigger Function, CTF) is divided into two functional modules: accounting metrics collection (Accounting Metrics Collection, AMC) and accounting data forwarding (Accounting Data Forwarding, ADF). The AMC on a UE transmits a usage information report (Usage Information Report) message to the ADF on a network side over a PC3ch interface. ProSe related network function (Network Function, NF), such as 5G direct discovery name management function (Direct Discovery Name Management Function, DDNMF), checks received usage information (usage information), and triggers a charging data request (Charging Data Request) of charging function (Charging Function, CHF), if it includes valid usage data (usage data) for direct discovery (Direct Discovery) or direct communication (Direct communication), and the CHF generates charging data record (Charging Data Record, CDR). The 5G functional module and charging architecture are based on service-based interfaces. In related technologies, a ProSe function (ProSe Function) module of 4G is decomposed into corresponding ProSe services (ProSe Service). For example, policy control function (Policy Control Function, PCF) is responsible for ProSe service authorization and configuration, and 5G DDNMF is responsible for ProSe direct discovery (ProSe Direct Discovery).

In FIG. 1, CTF (AMC) of the UE communicates with 5G DDNMF through the PC3ch interface, while 5G DDNMF communicates with CCS through service-based interface exhibited by charging function (Service-based interface exhibited by Charging Function, Nchf). The CCS includes: CHF, charging gateway function (Charging Gateway Function, CGF), rating function (Rating Function, RF), and account balance management function (Account Balance Management Function, ABMF). CGF communicates with a billing domain (Billing Domain) through a Bx interface (bill transfer interface between CGF and thermal charging function). As shown in FIG. 2, the network side also includes charging enablement function (Charging Enablement Function, CEF).

CEF may serve as a consumer of network function service (NF Service) to subscribe to related services, and to collect charging information that may be required from different NF Services or Management Services (Management Service).

### 3. 4G ProSe charging architecture based on PC5 direct communication and its basic process.

Currently, third generation partnership projects (Third Generation Partnership Projects, 3GPP) define a ProSe charging architecture and implementation based on LTE, which includes direct discovery, direct communication, UE to network relay (UE to Network Relay), and so on.

As shown in FIG. 3 and FIG. 4, in LTE, the ProSe function (ProSe function) receives charging information reported by CTF (AMC) of a UE through a PC3ch interface, and reports a Charging Data Request message to charging data function (Charging Data Function, CDF), the CDF generates charging data record CDR. After having generated the CDR, and the CDF may transmit the charging data record to CGF over a Ga interface. The CDF may be arranged separately, or integrated into the billing domain. As shown in FIG. 3, the CGF communicates with the billing domain over a Bpr interface.

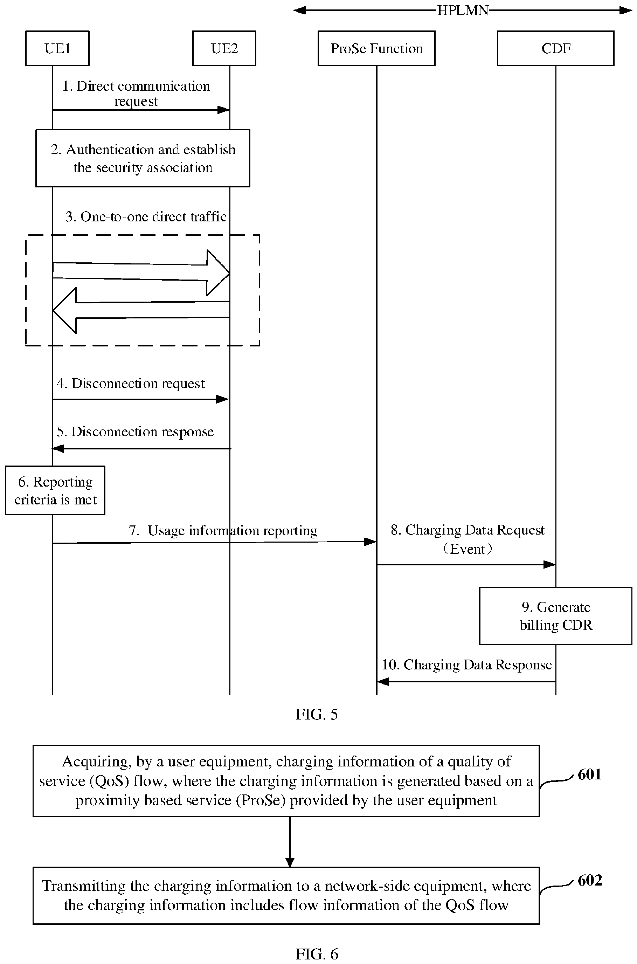

The basic charging procedure for the direct communication is as shown in FIG. 5, including:
step 1, UE1 transmits a direct communication request to LTE2;
step 2, performing authentication and establishing a security association between UE1 and UE2;
step 3, establishing direct traffic between UE1 and UE2;
step 4, UE1 transmits a disconnection request to LTE2;
step 5, UE1 receives a disconnection response;
step 6, a reporting criteria is met;
step 7, UE1 transmits a usage information report (Usage information report) to a ProSe Function;
step 8, the ProSe Function transmits a charging data request (Charging Data Request) (Event) to CDF;
step 9, the CDF generates billing information CDR; and
step 10, the CDF transmits a charging data response (Charging Data Response) to the ProSe Function.

It should be noted that the charging information of ProSe collected by UE1 in step 7 mainly includes ProSe related charging information in a link layer (such as international mobile subscriber identification (International Mobile Subscriber Identification, IMSI) of UE1, identification and location of public land mobile network (Public Land Mobile Network, PLMN) as accessed, and a manner for ProSe, etc.).

As such, in the ProSe 5G charging architecture using the service-based interface, a 5G data connectivity charging (data connectivity charging) function includes a protocol data unit (Protocol Data Unit, PDU) session in SMF, a service data flow and a QoS flow within the PDU session. However, in the current ProSe proximity communications, SMF is not responsible for ProSe direct communications. Therefore, according to the above procedures, SMF is unable to acquire the charging information at the level of the QoS flow, which causes the SMF to be unable to support charging based on the level of the QoS flow for the relevant 5G charging architecture, resulting in inaccurate charging. Therefore, it is necessary to redesign the charging method for ProSe QoS flow.

In order to solve the above technical problem, embodiments of the present application provide a charging method, a user equipment and a network-side equipment. FIG. 6 is a flow chart of a charging method according to an embodiment of the present application, which is applied to a user equipment and specifically includes the following steps.

Step 601 includes: acquiring, by the user equipment, charging information of a quality of service (QoS) flow, where the charging information is generated based on a proximity based service (ProSe) provided by the user equipment.

The proximity based service includes a direct communication service (such as a wireless network device to device (Device to Device, D2D) service; a vehicle to everything (vehicle to everything, V2X) service), a ProSe service including relay, etc. Whether the charging information needs to be reported by a UE based on a QoS flow may be pre-configured, or configured by a network-side equipment. If the UE determines, based on configuration information, that the charging information needs to be reported based on a QoS flow, the UE may act as CTF (AMC) to collect the charging information that is generated locally at the UE.

Step 602 includes: transmitting the charging information to a network-side equipment, where the charging information includes flow information of the QoS flow.

Optionally, the charging information further includes link information associated with the QoS flow.

After acquiring the charging information, UE transmits the charging information to the network-side equipment. The charging information may include the flow information of the QoS flow (such as relevant information of PC5 QoS flow) and/or the link information corresponding to the QoS flow. Optionally, UE may serve as a CTF (AMC) to report the charging information to a CTF (ADF) of the network-side equipment through a Usage Information Report, then the CTF (ADF) or CEF of the network-side equipment reports the charging information to a CHF through Nchf interface, and the CHF generates a charging bill.

Optionally, UE may report the Usage Information Report (i.e., the charging information) to the network-side equipment through the PC3ch interface, or report the Usage Information Report (i.e., charging information) to the network-side equipment through a non-access-stratum (Non-Access-Stratum, NAS) message, which is not limited herein.

In the embodiment of the present application, the UE acquires the charging information of the QoS flow and reports it to the network-side equipment, and the network-side equipment reports the charging information to the CHF, so as to complete the charging. This solution can achieve the charging based on the traffic of ProSe services, and can satisfy charging scenarios of various potential vertical services in ProSe.

Further, the acquiring the charging information of the QoS flow may include, but not limited to, the following manners:
Manner 1: acquiring the charging information of the QoS flow based on a charging trigger event.

In this embodiment, the charging trigger event may be a charging trigger event for ProSe charging. The charging trigger event may be customized or pre-configured for the UE, or configured by the network-side equipment. The UE collects the charging information for a local QoS flow based on the charging trigger event.

Manner 2: triggering to acquire the charging information of the QoS flow based on configuration information.

In this embodiment, the configuration information may be pre-configured by the network-side equipment to the user equipment, for example, provided by a management element (Management Element, ME). The configuration information may also be pre-configured by the user equipment, for example, being written into a universal integrated circuit card (Universal Integrated Circuit Card, UICC).

UE may determine whether the charging information needs to be collected, what type of charging information needs to be collected, and whether a reporting criteria for charging information is met, based on the configuration information of QoS flow charging. When the reporting criteria for the charging information is met, the UE reports the charging information to the network-side equipment through CTF (AMC). It should be noted that the configuration information may indicate whether to report the charging information based on the QoS flow by adding a new flag bit.

The configuration information may be provided in the following ways:
a) it is provided by a management element (Management Element, ME);
b) it is configured in a universal integrated circuit card (Universal Integrated Circuit Card, UICC);
c) a ProSe application server provides/updates it through PCF and/or PC1 reference points;
d) it is provided/updated by PCF to UE.

Specifically, the charging trigger event may include at least one or more of the following:
a) Establishment of a ProSe link, for example, establishment of a layer-2 link (Layer-2 link) between two UEs providing ProSe. That is, ProSe UE collects charging information based on charging of the QoS flow in a case where the layer-2 link is established. Optionally, collection of the charging information may be terminated at the end of the layer-2 link.
b) Establishment of the QoS flow, for example, establishment of a PC5 QoS flow. That is, ProSe UE collects charging information based on charging of the PC5 QoS flow in a case where the PC5 QoS flow is established. Optionally, collection of the charging information may be ended when the PC5 QoS flow ends.
c) Change in a QoS attribute parameter, for example, a PC5 QoS parameter. The PC5 QoS parameter includes, but not limited to: PC5 quality of service indication (PC5 Quality of Service Indication, PQI), guaranteed flow bit rate (Guaranteed Flow Bit Rate, GFBR), maximum flow bit rate (Maximum Flow Bit Rate, MFBR), PC5 LINK-aggregate maximum bit rate (Aggregate Maximum Bit Rate, AMBR) and range (Range). That is, the charging information is collected based on charging of the PC5 QoS flow when there is a change in the PC5 QoS attribute parameter.
d) A time condition of a ProSe link. The time condition of the ProSe link is used to characterize that a charging event is triggered in a case that a set time is met within a life period of the ProSe link. That is, the charging information of the QoS flow is collected when the time condition of the ProSe link is satisfied by the ProSe UE. For example, the ProSe link is layer-2 link. For example, the time condition is expiry of data time (Expiry of data time). For example, the time condition of the ProSe link is that a time limit of each layer-2 link expires. Specifically, the time condition of the link may be 10 minutes after the establishment of the link, which means trigger the acquiring of the charging information 10 minutes after the establishment of the ProSe link. In other words, charging starts 10 minutes after the establishment of the link.
e) A data volume condition of the ProSe link. The data volume condition of the ProSe link is used to characterize that a charging event is triggered in a case that a set data volume is met within the life period of the ProSe link. That is, the charging information of the QoS flow is collected when the data volume condition of the ProSe link is satisfied by the ProSe UE. For example, the ProSe link is layer-2 link. The time condition is, for example, expiry of data volume (Expiry of data volume). For example, the data volume condition of the ProSe link is that a limit to the data volume of each layer-2 link expires. Specifically, the data volume condition of the link may include that a volume of data transmitted on the link is 10M, which means trigger the acquiring of the charging information in the case where the volume of data transmitted on the link reaches 10M after the ProSe link is established. That is, charging starts after the volume of data transmitted on the link reaches 10M.
f) A time condition of the QoS flow. The time condition of the QoS flow is used to characterize that a charging event is triggered in a case that a set time is met within a life period of the QoS flow. That is, the charging information of the QoS flow is collected when the time condition of the QoS flow is satisfied by the ProSe UE. The time condition includes, for example, Expiry of data time. The time condition of the QoS flow may include, for example, a time limit for each QoS flow expires.
g) A data volume condition of the QoS flow. The data volume condition of the QoS flow is used to characterize that a charging event is triggered in a case that the set data volume is met within the life period of the QoS flow. That is, the charging information of the QoS flow is collected when the data volume condition of the QoS flow is satisfied by the ProSe UE. The data volume condition includes, for example, Expiry of data volume. The data volume condition of the QoS flow may include, for example, a limit to the data volume for each QoS flow expires.

It should be noted that the meanings represented by items f and g are the same as the meanings represented by items d and e. The difference lies in that the targeted objects are different, where one is for QoS flow and the other is for link.

Optionally, if the charging trigger event includes multiple items in the above items a) to g), at least two of the above items are included.

Specifically, the configuration information may include at least one or more of the following items:
1) a collection period for generating a usage information report based on the charging information;
2) a reporting period for reporting the charging information, namely, a reporting period of the charging information of the QoS flow reported by the user equipment;
3) a first indication information, where the first indication information is used to indicate whether to report the charging information based on the QoS flow;
4) a second indication information, where the second indication information is used to indicate whether to report a data volume of received data;
5) a third indication information, where the third indication information is used to indicate whether to report a data volume of transmitted data.

In this embodiment, the configuration information for the charging information based on the QoS flow may be configured by the network-side equipment for the UE, or pre-configured by the UE. The configuration information may include one or more of the above items. The relevant information content may be indicated by the configuration information by adding a new flag bit. For example, the UE collects and reports the charging information based on the collection period of the usage information report generated by the user equipment; in the case where the first indication information indicates that the UE reports the charging information based on the QoS flow, the UE reports the charging information to the network-side equipment; in the case where the second indication information indicates that the UE reports the data volume of received data, UE may simultaneously report the charging information while reporting the data volume of received data; in the case where the third indication information indicates that the UE reports the data volume of transmitted data, UE may simultaneously report the charging information while reporting the data volume of transmitted data.

As an optional embodiment, the user equipment collects charging information of QoS flow, which may refer to the configuration information. An example is given that the configuration information of the user equipment includes the first indication information, in the case where the first indication information indicates the user equipment to report the charging information based on the QoS flow, the user equipment collects the charging information of the QoS flow based on a charging trigger event, and transmits the charging information to the network-side equipment.

A level of charging trigger based on QoS flow by the user equipment may be QoS flow based trigger and/or link based trigger.

The link based trigger may be, for example, trigger related to a Layer-2 link on PC5. The trigger related to the Layer-2 link may refer to that PC5 QoS flow based charging is triggered by a change in the Layer-2 link, where a QoS flow in the Layer-2 link also changes when the Layer-2 link changes.

The QoS flow based trigger may be, for example, trigger related to a PC5 QoS flow in a Layer-2 link. That is, PC5 QoS flow based charging may be triggered by a change of a QoS flow in the Layer-2 link, where the PC5 QoS flow based charging may be triggered by a change of a separate QoS flow.

Optionally, the user equipment may transmit a usage information report including the charging information when transmitting the charging information to the network-side equipment. Specifically, the method further includes: after acquiring the charging information, generating a usage information report including the charging information according to a collection period of the usage information report included in configuration information. The transmitting the charging information to the network-side equipment includes: transmitting the usage information report to the network-side equipment according to a reporting period in the configuration information.

In the embodiment, after acquiring the charging information, the user equipment generates a usage information report (Usage Information Report) based on the collection period of the usage information report in the configuration information, and reports the usage information report at a predetermined reporting period. The usage information report includes the charging information.

As an optional embodiment, the transmitting the charging information to the network-side equipment includes: transmitting the charging information to a charging trigger function (CTF) or a charging enablement function (CEF) of the network-side equipment, where the charging information is forwarded to a CHF by the CTF or the CEF, and the charging information is used for the CHF to charge for the ProSe that occurs.

In this embodiment, the user equipment may collect the charging information locally through CTF (AMC), and report the charging information to a CTF (ADF) of the network-side equipment when a criteria for reporting the charging information based on the QoS flow is met. The CTF (ADF) of the network-side equipment then transmits the charging information to CHF, and the CHF generates a charging bill. The CTF (ADF) functional module may be integrated into ProSe related NF (such as 5G DDNMF).

Alternatively, the user equipment may collect the charging information locally through CTF (AMC) and report the charging information to the CEF of the network-side equipment when a criteria for reporting the charging information based on the QoS flow is met. The CEF of the network-side equipment then transmits the charging information to CHF, and the CHF generates a charging bill.

The user equipment may report the charging information to the CTF (ADF) of the network-side equipment through a Usage Information Report, and the CTF (ADF) of the network-side equipment may send the charging information to the CHF by using a Charging Data Request over the Nchf interface.

Optionally, the transmitting the charging information to the CEF of the network-side equipment specifically includes: transmitting the charging information to the CEF of the network-side equipment through a charging related network function (NF) service. The charging information may be subscribed by the CEF to the NF service.

In this embodiment, the CEF may serve as a consumer for ProSe services (such as 5G DDNMF) to subscribe related services, and to collect charging information that may be required from different NF services or management services (Management Service). The CEF may subscribe to charging information to the NF service (for example, subscribe to a notification of the usage information report). In the case where a criteria for reporting charging information based on a QoS flow is met, a user equipment collects charging information and transmits it to the NF service. After receiving the charging information, the NF service transmits the charging information to the CEF. The CEF transmits the charging information to the CHF over the Nchf interface, and the CHF generates a charging bill.

Specifically, the flow information of the QoS flow may include at least one or more of the following items:
a) QoS attribute parameter, for example, a PC5 QoS parameter, such as PQI, GFBR, MFBR, PC5 LINK-AMBR and Range;
b) QoS characteristic parameter, for example, a PC5 QoS characteristic parameter, such as resource type, priority, packet delay budget, packet error rate, average window, maximum data burst;
c) QoS flow identifier PFI (PC5 QoS Flow Identifier, PFI); PFI, also known as PC5 QoS flow identity (Identity document, ID), is used to identify a QoS flow, which may be mapped by a UE-network relay in relay scenarios;
d) a transmission time of a first packet of a service data flow that matches the PFI;
e) a transmission time of a last packet of the service data flow that matches the PFI;
f) a time when the QoS flow occurs;
g) an identifier of a serving network function.

The user equipment may directly report PQI (i.e., PC5 5QI, 5G Qos identifier of a PC5 interface) in the QoS attribute parameter or the QoS characteristic parameter, or convert it into a corresponding 5QI and report the 5QI. That is, the PC5 QoS parameter or PC5 QoS characteristic parameter may include PQI. Alternatively, the user equipment maps PQI to 5QI, and the 5QI is carried in the PC5 QoS parameter or PC5 QoS characteristic parameter.

It should be noted that the flow information of the QoS flow may not only include one or more of the above information content, but also include the time when the QoS flow ended. The flow information of the QoS flow may also include other charging related information, such as the following table:

| | | |
|---|---|---|
| Trigger | OC | This field holds a reason for closing a QFI data container |
| Trigger timestamp | OC | This field holds the timestamp of the trigger |
| Time | OC | This field holds a usage time |
| Total amount | OC | This field holds an amount of uplink and downlink usages |
| Uplink usage | OC | This field holds an amount of uplink usage |
| Downlink usage | OC | This field holds an amount of downlink usage |
| Local serial number | M | This field holds a serial number of the QFI data container |

Specifically, the link information may include at least one or more of the following:
a) source Internet protocol (Internet Protocol, IP) address;
b) target IP address;
c) relay IP address;
d) IP multicast address of a ProSe group (Group), such as IP multicast address of the ProSe group;
e) identifier of a device participating in the ProSe, such as an identifier of a ProSe UE, and an identifier of a ProSe relay UE;
f) link identifier of a ProSe link, such as a ProSe layer-2 identifier and a target ProSe layer-2 identifier.

In this embodiment, the link information may include Layer-2 ID, Layer-2 Group ID, relay UE ID, etc. In the case where ProSe direct communication is of IP type, it may further include IP information.

An implementation process of the charging method is explained below through specific embodiments.

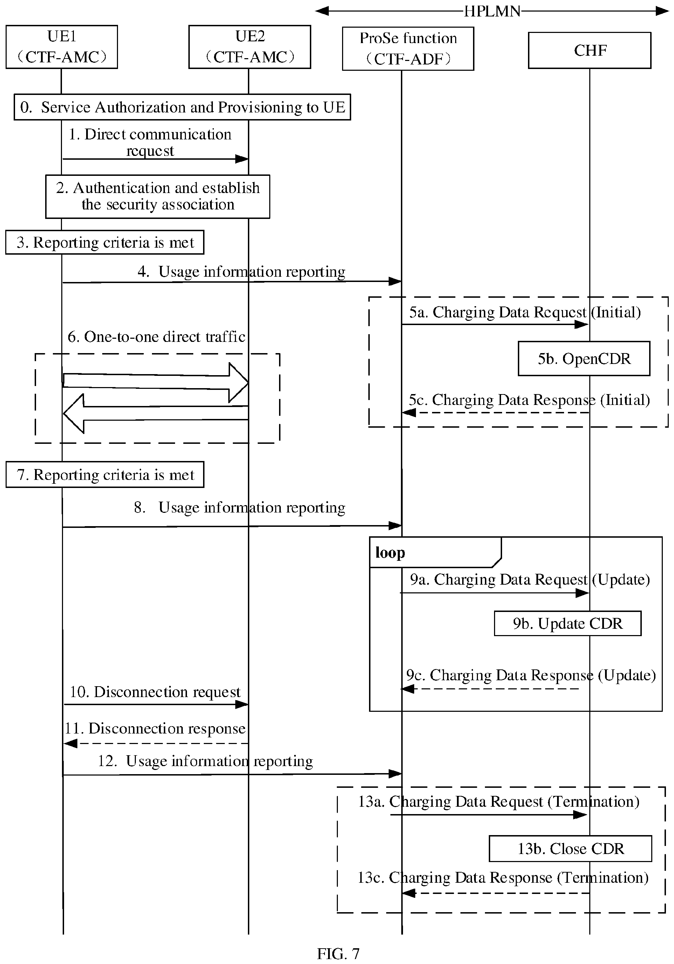

Example 1: a session (Session) based charging method in ProSe Direct Communication. As shown in FIG. 7, taking a PC5 QoS flow as an example, the UE reporting Charging information based on the PC5 QoS flow specifically includes the following steps.

In step 0, service authorization and parameter provisioning are configured to UE, where a flag bit may be added to indicate whether the UE reports charging information based on the PC5 QoS flow. The parameter configuration may be achieved:
a) it is provided by ME;
b) it is configured in UICC;
c) it is provided/updated by a ProSe application server through a PCF and/or PC1 reference point;
d) it is provided/updated by PCF to UE.

In step 1, UE1 and UE2 initiate a direct communication request.

In step 2, UE1 and UE2 initiate a mutual authentication procedure, perform identity verification, and establish a security association. After the authentication procedure is successful, a layer-2 security link is established on PC5, and then UEs perform direct communication by means of unicast, multicast, or broadcast.

In step 3, when the UE determines that a criteria for reporting the QoS flow based charging information is met, the UE triggers the procedure of acquiring and reporting the charging information based on the configuration information,.

Optionally, whether the UE meets the reporting criteria for the charging information is determined based on the configuration information. For example, if the configuration information includes a collection period for generating usage information report by the user equipment, the reporting criteria is met when the UE reaches the collection period, and the collected charging information based on the PC5 QoS flow is reported. If the configuration information includes first indication information, and the first indication information indicates that UE reports charging information based on the PC5 QoS flow, the reporting criteria is met, and the UE reports charging information based on the PC5 QoS flow as collected. If the configuration information includes a second indication information, and the second indication information indicates that the UE reports a data volume of received data, the reporting criteria is met, and the PC5 QoS flow based charging information is carried when the UE transmits the data volume of received data. If the configuration information includes a third indication information, and the third indication information indicates that the UE reports a data volume of transmitted data, the reporting criteria is met, and the PC5 QoS flow based charging information is carried when the UE transmits the data volume of transmitted data.

In step 4, UE1 and UE2 respectively report usage information reports including the charging information, i.e., transmitting the charging information to ProSe Service (CTF ADF). This message shall carry information related to one or more of PC5 QoS flows and link related information. The flow information of the PC5 QoS flow and the link information will not be further described here.

In step 5a, CTF (ADF) transmits a charging data request (initial) to CHF, which carries the flow information of the PC5 QoS flow.

In step 5b, CHF creates a ProSe service charging bill based on a policy, which carries the flow information of PC5 QoS flow and the link information related to QoS flow.

In step 5c, CHF grants authorization to NF (CTF) for starting the service and returns a charging data response message (initial).

In step 6, persistent ProSe direct traffic is performed between UE1 and UE2 (One-to-One direct traffic).

In step 7, UE triggers a charging information reporting procedure when the charging information reporting criteria based on the PC5 QoS flow is met.

In step 8, UE reports usage information report including the charging information to CTF. The usage information report includes the flow information of the PC5 QoS flow and the link information related to the QoS flow.

In steps 9a to 9c, similar to steps 5a to 5c, CTF (ADF) transmits a charging data request message (update), and CHF updates CDR, and responds with a charging data response message (update).

In step 10, UE1 transmits a disconnection request message to LTE2; UE2 responds with a disconnection response message and deletes all context data associated with the layer-2 link.

In step 11, UE1 receives the disconnection response message from UE2, and triggers a charging information reporting procedure.

In step 12, UE1 transmits a usage information report including charging information to NF (CTF), which carries the flow information of the PC5 QoS flow and the link information related to the QoS flow.

In step 13a, CTF (ADF) transmits a charging data request message (termination) to CHF, which carries the flow information of the PC5 QoS flow and the link information related to the QoS flow.

In step 13b, CHF creates a ProSe service charging bill based on a policy, which may include the flow information carrying the PC5 QoS flow and the link information related to the QoS flow; the CDR in this step is a final bill reported to the billing domain. After the final CDR has been generated, the CDR may be closed.

In step 13c, CHF returns a charging data response message (termination).

Example 2: an event (Event) based charging method in ProSe Direct Communication.

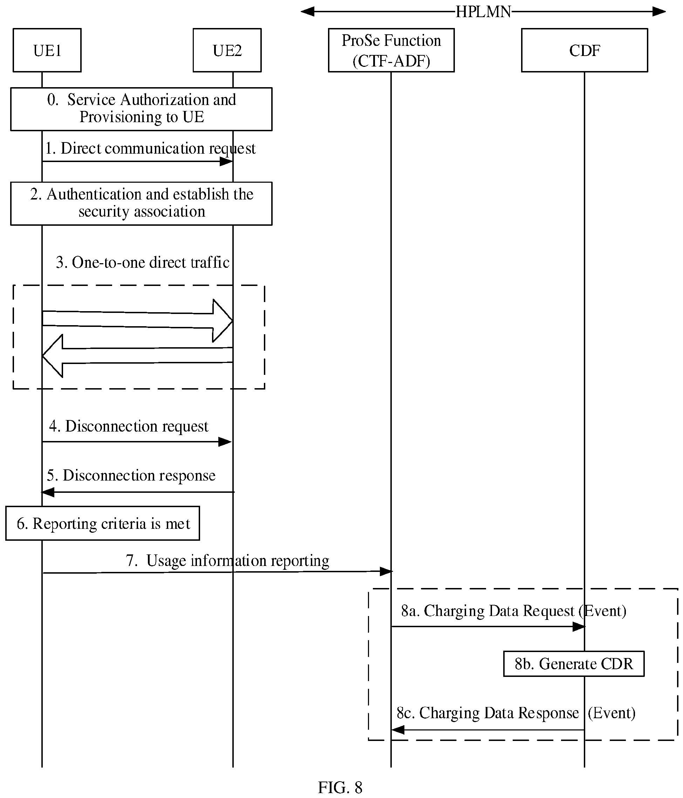

Event based charging is a post event charging (Post Event Charging, PEC) manner, which is reported to CTF (ADF) of the network-side equipment through usage information report after the end of a service. After it is processed by ADF in a merged manner, the charging data request message is reported to CHF, and finally, a CDR is generated by CHF. An example is given that the QoS flow includes a PC5 QoS flow, as shown in FIG. 8, the following steps are included.

In step 0, service authorization and parameter provisioning are configured for UE, where a flag bit may be added to indicate whether the UE reports charging information of a PC5 QoS flow.

In step 1, UE1 initiates a direct communication request to UE2.

In step 2, UE1 and UE2 initiate a mutual authentication procedure, perform identity verification, and establish a security association. After the authentication procedure is successful, a layer-2 security link is established on PC5, and UEs perform direct communication in unicast, multicast, or broadcast mode.

In step 3, ProSe direct communication is initiated between UEs.

In step 4, UE1 transmits a disconnection request message to LTE2; LTE2 responds with a disconnection response message and deletes all context data associated with a layer-2 link.

In step 5, UE1 receives the disconnection response message from UE2, and triggers a usage information reporting procedure.

In steps 6 and 7, UE1 collects flow information of QoS flow over PC5 during PC5 communication with UE2. After the end of the service, when UE determines that a charging information reporting criteria based on PC5 QoS flow is met, UE reports it to CTF of the network-side equipment through a usage information report, namely, ProSe Service (CTF ADF). The usage information report carries flow information of PC5 QoS flow and link information related to QoS flow.

In steps 8a to 8c, ADF reports a charging data request message (event) to CHF, which carries the flow information of the PC5 QoS flow and the link information related to the QoS flow. Finally, CHF generates charging information CDRs, which may include QoS related charging information; and CHF transmits a charging data response message (event) to ADF.

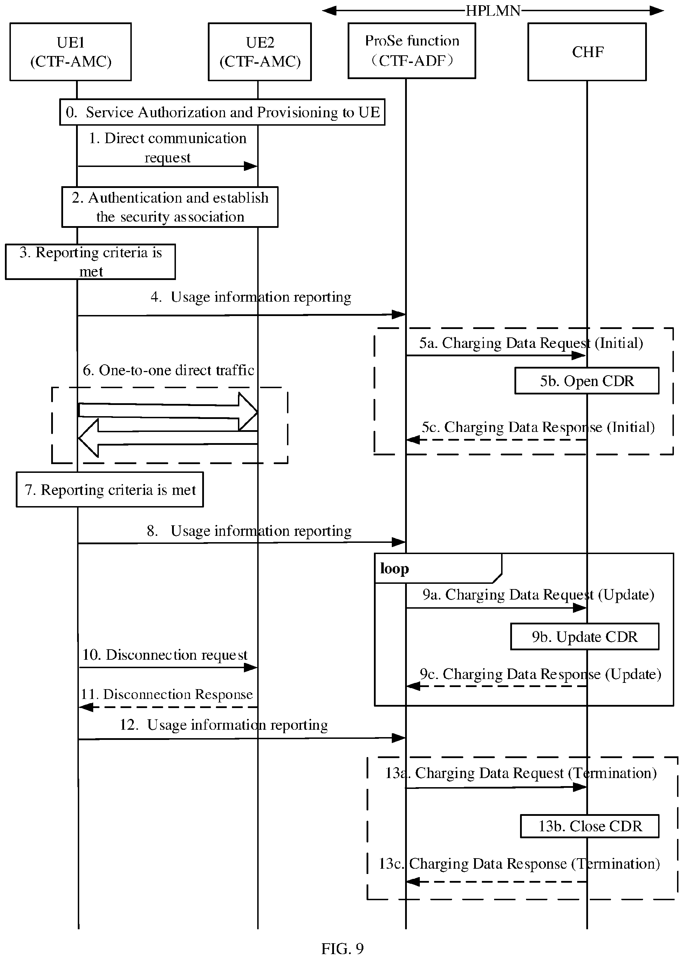

Example 3: Event based charging method in ProSe Direct Communication. By subscribing to the charging information by CEF, CEF may serve as a consumer of ProSe Service (such as 5G DDNMF) to subscribe to related services, and to collect charging information that may be needed from different NF Services or Management Services. An example is given that the QoS flow is a PC5 QoS flow, specifically as shown in FIG. 9, the following steps are included.

In step 1, CEF decides to subscribe to a notification of usage information report from a charging related ProSe Service Provider (ProSe Service Provider) (such as 5G DDNMF).

In step 2, CEF initiates a subscription request to the ProSe Service Provider.

In step 3, CEF receives a subscription response.

In step 4, UE1 initiates a direct communication request to UE2.

In step 5, UE1 and UE2 initiate a mutual authentication procedure, perform identity verification, and establish a security association. After the authentication procedure is successful, a layer-2 security link is established on PC5, and UEs perform direct communication in unicast, multicast, or broadcast mode.

In step 6, ProSe direct communication is initiated between UEs.

In step 7, UE1 transmits a disconnection request message to LTE2; LTE2 responds with a disconnection response message and deletes all context data associated with a layer-2 link.

In step 8, UE1 receives the disconnection response message from UE2, and triggers a usage information reporting procedure.

In step 9, when UE1 determines that a charging information reporting criteria based on PC5 QoS flow is met, UE1 triggers reporting of the charging information.

In step 10, UE transmits a usage information report to the ProSe Service Provider, which carrying the flow information of the PC5 QoS flow and the link information related to the QoS flow.

In step 11, the charging ProSe Service Provider notifies CEF to process the usage information report.

In step 12, CEF responds with a notification of confirmation message.

In step 13a, CEF transmits a charging data request message to CHF, which carries the flow information of the PC5 QoS flow and the link information related to the QoS flow.

In step 13b, CHF generates CDR.

In step 13c, CHF responds with a charging request response message.

Example 4: event based charging method for UE-network relay (UE-Network Relay) in ProSe Direct Communication.

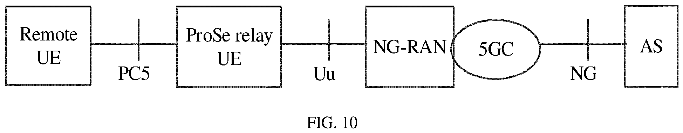

A L3 relay architecture (L3 relay architect) is shown in FIG. 10.

A remote UE communicates with the ProSe UE-network relay over a PC5 interface. A UE-network relay communicates with a new generation radio access network (New Generation Radio Access Network, NG-RAN) over a Uu interface, and a 5G core network (5GC) communicates with an access stratum (Access Stratum, AS) over an N6 interface.

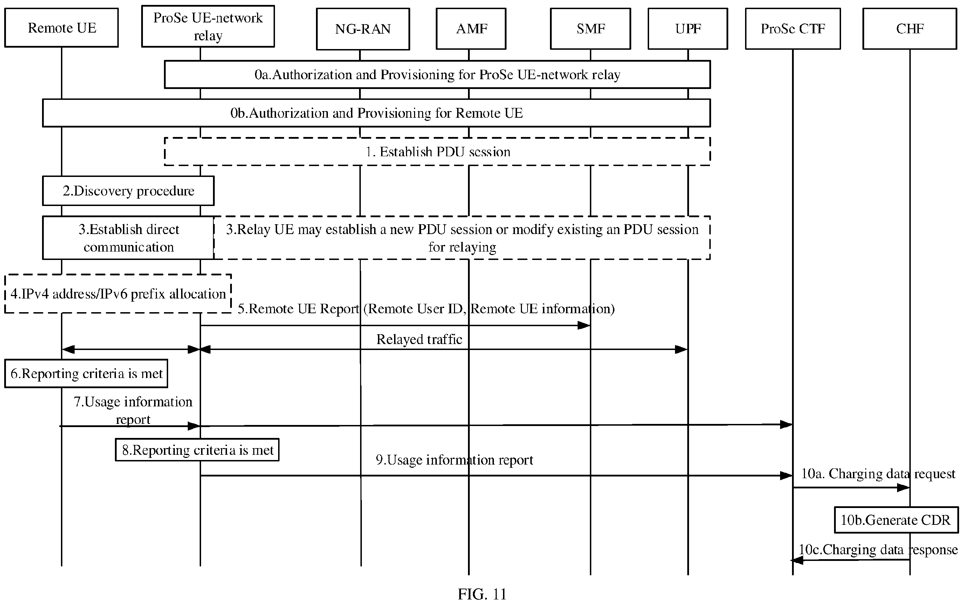

Taking the QoS flow being a PC5 QoS flow as an example, specifically as shown in FIG. 11, the architecture includes: remote UE, ProSe UE-network relay, NG-RAN, access and mobility management function (Access and Mobility Management Function, AMF), session management function (Session Management Function, SMF), user plane function (User Plane Function, UPF), ProSe service CTF, and CHF. An implementation procedure of the charging method includes the following steps.

In step 0a to step 0b, service authorization and provisioning are configured for the ProSe UE-network relay; and service authorization and configuration is configured for the remote UE. A flag bit may be added to indicate whether the charging information of PC5 QoS flow needs to be reported.

In step 1, the UE-network relay establishes a PDU session for relaying, by using a default PDU session parameter received in step 0 or a pre-configured parameter.

In step 2, the Remote UE executes a ProSe discovery procedure according to the authorization and the configuration in step 0.

In step 3, the remote UE selects a UE-network relay and establishes a direct communication.

In step 4, IPv4 address/IPv6 prefix is allocated.

In step 5, the UE-network relay reports a UE-network relay report (such as remote user ID, remote UE information) to SMF.

In step 6, when the remote UE determines that a charging information reporting criteria is met, the remote UE triggers a usage reporting procedure based on the configuration. The trigger level and the trigger condition will not be elaborated herein.

In step 7, the remote UE transmits a usage information report to the UE-network relay; and the UE-network relay forwards it to CTF at the network side, it carries the flow information of the PC5 QoS flow and the link information related to the QoS flow.

In step 8, when the UE-network relay determines that the charging information reporting criteria is met, the UE-network relay triggers the usage reporting procedure according to the configuration.

In step 9, the UE-network relay transmits the usage information report to a ProSe service CTF at network side.

It should be noted that steps 8 and 9 may occur before steps 6 and 7, and a specific order is not limited herein.

In step 10a, CTF (ADF) transmits a charging data request message (termination) to CHF, which carries information related to a PC5 QoS flow and link information corresponding to the PC5 QoS flow.

In step 10b, CHF generates a CDR based on policy.

In step 10c, CHF returns a charging data response message (termination).

In the embodiments of the present application, UE acquires charging information based on a QoS flow and reports it to network-side equipment, and the network-side equipment reports the charging information to CHF, so as to complete the charging. This solution can be based on traffic charging of the ProSe service, and can satisfy charging scenarios of various potential vertical services in ProSe.

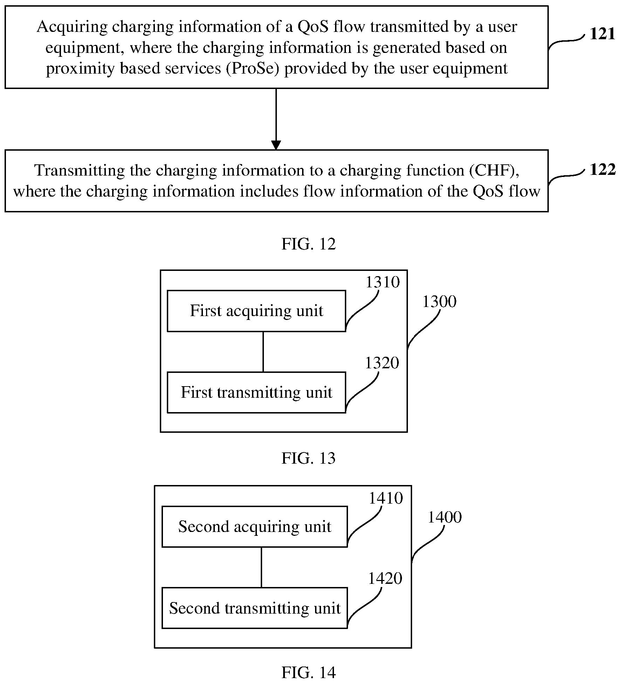

As shown in FIG. 12, an embodiment of the present application further provides a charging method, applied to a network-side equipment. The method includes:
step 121, acquiring, by the network-side equipment, charging information of a QoS flow transmitted by a user equipment, where the charging information is generated based on proximity based services (ProSe) provided by the user equipment; and
step 122, transmitting the charging information to a charging function (CHF), where the charging information includes flow information of the QoS flow.

In the embodiment, the user equipment collects the charging information based on the QoS flow and can transmit the charging information to the network-side equipment through a usage information report. Optionally, after receiving the charging information, the network-side equipment may generate a charging request message based on the charging information, and the charging request message includes the charging information. The charging information is transmitted to CHF through the charging request message, and a charging bill is generated by CHF. Optionally, the network-side equipment may configure whether the user equipment need to report the charging information based on the QoS flow. When the user equipment needs to report the charging information based on the QoS flow, the UE collects and reports the charging information of the QoS flow.

In the embodiments of the present application, UE acquires charging information of a QoS flow and reports it to the network-side equipment, and the network-side equipment reports the charging information to CHF, so as to complete the charging. This solution can be based on traffic charging of the ProSe service, and can satisfy charging scenarios of various potential vertical services in ProSe.

Optionally, before acquiring the charging information of the QoS flow transmitted by the user equipment, the method may further include: configuring configuration information about the charging information for the user equipment. For example, the configuration information may be charging configuration information of ProSe based on a PC5 QoS flow.

Specifically, the configuration information may include at least one or more of the following items:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

In the embodiment, the configuration information may be configured by the network-side equipment for the UE, which can include one or more of the above items, and the multiple items may refer to at least two. The UE may determine whether a charging information reporting criteria is met based on the configuration information. When the charging reporting criteria is met, CTF (AMC) on the UE reports the charging information to the network-side equipment. The configuration information may indicate whether the UE reports the charging information based on the QoS flow by adding a new flag bit. It should be noted that the configuration information may also be pre-configured by the user equipment, such as in UICC. In the case where the configuration information is pre-configured by the user equipment, the step of configuring the configuration information for the user equipment can be omitted. The configuration information can be provided in the following ways:
a) it is provided by ME;
b) it is configured in UICC;
c) it is provided/updated by a ProSe application server through a PCF and/or PC1 reference point;
d) it is provided/updated by PCF to UE.

It should be noted that UE may also acquire the charging information of the QoS flow based on a charging trigger event, which will not be elaborated herein.

Specifically, a level of charging trigger based on QoS flow by the user equipment may be QoS flow based trigger and/or link based trigger.

For example, the link based trigger may be trigger related to a Layer-2 link on PC5. The trigger related to the Layer-2 link may refer to that charging based on a PC5 QoS flow is triggered by a change in the Layer-2 link, where the QoS flow in the Layer-2 link also changes when the Layer-2 link changes.

For example, the QoS flow based trigger may be trigger related to a PC5 QoS flow in a Layer-2 link. That is, the charging based on the PC5 QoS flow may be triggered by a change of the QoS flow in the Layer-2 link, where the charging based on PC5 QoS flow may be triggered by a change of a single QoS flow.

Optionally, the acquiring the charging information of the QoS flow transmitted by the user equipment may include: acquiring a usage information report transmitted by the user equipment according to a reporting period of the charging information, where the usage information report includes the charging information.

In the embodiment, the configuration information of charging information may be configured by the network-side equipment for the UE, or the configuration information may also be pre-configured for the UE. The configuration information may include the reporting period of the usage information report reported by the UE, and the usage information report is generated based on the charging information. The UE transmits the usage information report to the network-side equipment according to the reporting period.

As an optional embodiment, the acquiring the charging information transmitted by the user equipment may include: receiving the charging information transmitted by the user equipment to a charging trigger function (CTF) or a charging enablement function (CEF).

The transmitting the charging information to the charging function (CHF) includes: transmitting the charging information to the CHF through the CTF or the CEF by using a service-based interface exhibited by charging function (Nchf). The charging information is used for the CHF to charge for the ProSe that occurs.

In this embodiment, the user equipment may collect the charging information of QoS locally through CTF (AMC), and report the charging information to a CTF (ADF) of the network-side equipment when a criteria for reporting the charging information based on the QoS flow is met. The CTF (ADF) of the network-side equipment then transmits the charging information to CHF, and the CHF generates a charging bill. The CTF (ADF) functional module may be integrated into ProSe related NF (such as 5G DDNMF).

Alternatively, the user equipment may collect the charging information of QoS locally through CTF (AMC) and report the charging information to the CEF of the network-side equipment when a criteria for reporting the charging information based on the QoS flow is met. The CEF of the network-side equipment then transmits the charging information to CHF, and the CHF generates a charging bill.

The user equipment may report the charging information to the CTF (ADF) or CEF of the network-side equipment through a Usage Information Report, and the CTF (ADF) of the network-side equipment may send the charging information to the CHF by using a Charging Data Request over the Nchf interface, to enable the CHF to generate a charging bill according to the charging information.

As an optional embodiment, the method may further include: subscribing to the charging information to a charging related NF service through CEF.

The receiving the charging information transmitted by the user equipment to the charging enablement function (CEF) includes: receiving the charging information transmitted by the NF service to the CEF. The charging information is transmitted by the user equipment to the NF service.

In the embodiment, the CEF may serve as a consumer for ProSe services (such as 5G DDNMF) to subscribe related services, and to collect charging information that may be required from different NF services or management services. The CEF may subscribe to charging information to the NF service (for example, subscribe to a notification of the usage information report). In the case where a criteria for reporting charging information based on a QoS flow is met, a user equipment collects charging information and transmits it to the NF service. After receiving the charging information, the NF service transmits the charging information to the CEF. The CEF transmits the charging information to the CHF over the Nchf interface, and the CHF generates a charging bill.

Specifically, the flow information of the QoS flow may include at least one or more of the following items:
a) QoS attribute parameter, for example, a PC5 QoS parameter, such as PQI, GFBR, MFBR, PC5 LINK-AMBR and Range;
b) QoS characteristic parameter, for example, a PC5 QoS characteristic parameter, such as resource type, priority, packet delay budget, packet error rate, average window, maximum data burst;
c) PFI; PFI is also referred to as PCS QoS flow ID and used to identify a QoS flow, which may be mapped by a UE-network relay in relay scenarios;
d) a transmission time of a first packet of a service data flow that matches the PFI;
e) a transmission time of a last packet of the service data flow that matches the PFI;
f) a time when the QoS flow occurs;
g) an identifier of a serving network function.

The user equipment may directly report PQI in the QoS parameter or the QoS characteristic parameter, or convert it into a corresponding 5QI and report the 5QI. That is, the QoS parameter or QoS characteristic parameter may include PQI. Alternatively, the user equipment maps PQI to 5QI, and the 5QI is carried in a PC5 QoS parameter or a PC5 QoS characteristic parameter.

It should be noted that the flow information of the QoS flow may not only include one or more of the above information, but also include other charging related information, which is not limited thereto.

Specifically, the charging information further includes link information associated with the QoS flow, where the link information may include at least one or more of the following:
a) a source IP address;
b) a target IP address;
c) a relay IP address;
d) an IP multicast address of a ProSe group, such as IP multicast address of the ProSe group;
e) an identifier of a device participating in the ProSe, such as an identifier of ProSe UE-to-Network relay UE;
f) a link identifier of a ProSe link, such as a ProSe layer-2 identifier and a ProSe target layer-2 identifier.

In this embodiment, the link information may include Layer-2 ID, Layer-2 Group ID, relay UE ID, etc. In the case where ProSe direct communication is of IP type, it may further include IP information.

The implementation process of the charging method in the embodiment of the present application is as shown in FIG. 7 to FIG. 11, and will not be elaborated here. It should be noted that the embodiments of the charging method applied to the network-side equipment in the present application can achieve all the processes implemented by the network-side equipment in the above embodiments of the charging method applied to the user equipment, and will not be elaborated here.

In the embodiments of the present application, UE acquires the charging information based on the QoS flow and reports it to network-side equipment, and the network-side equipment reports the charging information to CHF, so as to complete the charging. This solution can be based on traffic charging of the ProSe service, and can satisfy charging scenarios of various potential vertical services in ProSe.

The charging method of the present application has been introduced in the above embodiments, and the corresponding apparatus thereof will be further explained in conjunction with the accompanying drawings in the following embodiments.

Specifically, as shown in FIG. 13, a charging apparatus 1300 according to an embodiment of the present application, applied to user equipment, includes:
a first acquiring unit 1310, configured to acquire charging information of a quality of service (QoS) flow, where the charging information is generated based on a proximity based service (ProSe) provided by a user equipment; and
a first transmitting unit 1320, configured to transmit the charging information to a network-side equipment, where the charging information includes flow information of the QoS flow.

Optionally, the first acquiring unit 1310 is specifically configured to acquire the charging information of the QoS flow based on a charging trigger event; or, trigger to acquire the charging information of the QoS flow based on configuration information.

Optionally, the charging trigger event includes at least one or more of the following:
establishment of a ProSe link;
establishment of the QoS flow;
change in a QoS attribute parameter;
a time condition of the ProSe link, where the time condition of the ProSe link is used to represent that a charging event is triggered in a case that a set time is met within a life period of the ProSe link;
a data volume condition of the ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the apparatus further includes a report generation unit, configured to: generate, after acquiring the charging information, a usage information report including the charging information according to a collection period for generating the usage information report included in configuration information. The first transmitting unit 1320 is specifically configured to transmit the usage information report to the network-side equipment according to a reporting period in the configuration information.

Optionally, the first transmitting unit 1320 includes: a first transmitting subunit configured to transmit the charging information to a charging trigger function (CTF) or a charging enablement function (CEF) of the network-side equipment, where the charging information is forwarded to a CHF by the CTF or the CEF, and the charging information is used for the CHF to charge for the ProSe that occurs.

Optionally, the first transmitting subunit is specifically configured to: transmit the charging information to the CEF of the network-side equipment through a charging related network function (NF) service.

Optionally, the flow information of the QoS flow includes at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

In the embodiment of the present application, the UE acquires the charging information of the QoS flow and reports it to the network-side equipment, and the network-side equipment reports the charging information to CHF, so as to complete the charging. This solution can achieve the charging based on the traffic of ProSe services, and can satisfy charging scenarios of various potential vertical services in ProSe.

It should be noted that the above apparatus provided in the embodiments of the present application can implement all steps in the method implemented in the above method embodiments, and can achieve the same technical effects. Therefore, the description and beneficial effects of this embedment that are the same as those of the method embodiments will not be further elaborated in detail.

As shown in FIG. 14, the charging apparatus 1400 provided in an embodiment of the present application, applied to network-side equipment, includes:
a second acquiring unit 1410, configured to acquire charging information of a QoS flow transmitted by a user equipment, where the charging information is generated based on a proximity based service (ProSe) provided by the user equipment; and
a second transmitting unit 1420, configured to transmit the charging information to a charging function (CHF), where the charging information includes flow information of the QoS flow.

Optionally, the apparatus further includes a configuration unit, configured to: configure configuration information about the charging information for the user equipment.

Optionally, the configuration information includes at least one or more of the following:
a collection period for generating a usage information report based on the charging information;
a reporting period for reporting the charging information;
a first indication information, where the first indication information is used to indicate whether to report the QoS flow based charging information;
a second indication information, where the second indication information is used to indicate whether to report a data volume of received data;
a third indication information, where the third indication information is used to indicate whether to report a data volume of transmitted data.

Optionally, the second acquiring unit 1410 is specifically configured to acquire a usage information report transmitted by the user equipment according to a reporting period of the charging information, where the usage information report includes the charging information.

Optionally, the second acquiring unit 1410 specifically includes a first reception subunit, configured to receive the charging information transmitted by the user equipment to a charging trigger function (CTF) or a charging enablement function (CEF). The second transmitting unit 1420 is specifically configured to transmit the charging information to the CHF through the CTF or the CEF by using a service-based interface exhibited by charging function (Nchf), where the charging information is used for the CHF to charge for the ProSe that occurs.

Optionally, the first reception subunit is specifically configured to: receive the charging information transmitted by the NF service to the CEF. The charging information is transmitted by the user equipment to the NF service.

Optionally, the flow information of the QoS flow includes at least one or more of the following:
a QoS attribute parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

In the embodiment of the present application, the UE acquires the charging information of the QoS flow and reports it to the network-side equipment, and the network-side equipment reports the charging information to CHF, so as to complete the charging. This solution can achieve the charging based on the traffic of ProSe services, and can satisfy charging scenarios of various potential vertical services in ProSe.

It should be noted that the above apparatus provided in the embodiments of the present application can implement all method steps in the method implemented in the above method embodiments applied to the network-side equipment, and can achieve the same technical effects. Therefore, the description and beneficial effects of this embedment that are the same as those of the method embodiments will not be further elaborated in detail.

It should be noted that the division of units in the embodiments of the present application is illustrative, and is only a logical function division, and there may be another division manner in actual implementation. In addition, the functional units in various embodiments of the present application may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present application, or all or a part of the technical solution may be implemented in a form of a software product. The computer software product is stored in a storage medium, and includes several instructions to enable a computer device (which may be a personal computer, a server, or a network device, etc.) or a processor (processor) to execute all or part of the steps of the methods described in the various embodiments of the present application. The aforementioned storage media include: a universal serial bus (USB) flash drive, removable hard disk, read-only memory (Read-Only Memory, ROM), random access memory (Random Access Memory, RAM), magnetic disk, optical disc or other media that can store program codes.

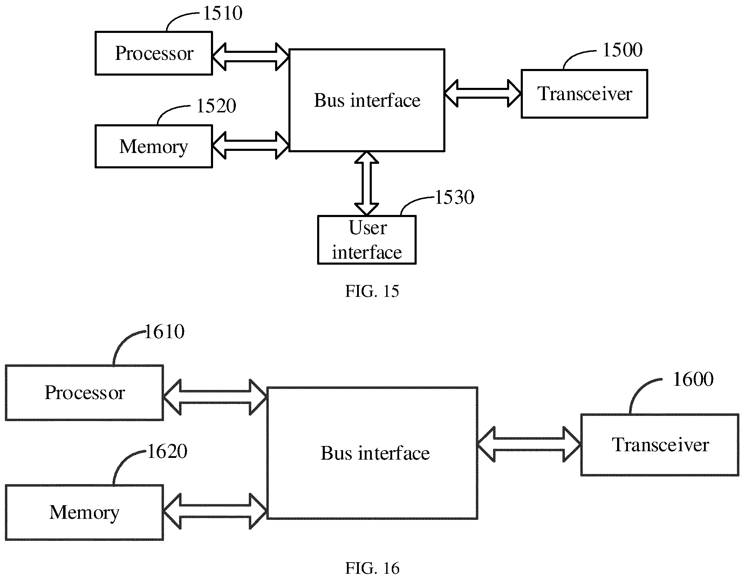

As shown in FIG. 15, an embodiment of the present application further provides a user equipment, which includes a memory 1520, a transceiver 1500 and a processor 1510. The memory 1520 is configured to store a computer program; the transceiver 1500 is configured to transmit and receive data under control of the processor 1510. The processor 1510 is configured to read the computer program in the memory to perform following operations: acquiring charging information of a quality of service (QoS) flow, where the charging information is generated based on a proximity based service (ProSe) provided by the user equipment; the transceiver is configured to transmit the charging information to a network-side equipment, where the charging information includes flow information of the QoS flow.

The transceiver is configured to transmit the charging information to a network-side equipment, where the charging information includes flow information of the QoS flow.

Optionally, the processor 1510 is configured to read the computer program in the memory to perform following operations: acquiring the charging information of the QoS flow based on a charging trigger event; or, triggering to acquire the charging information of the QoS flow based on configuration information.

Optionally, the charging trigger event includes at least one or more of the following:
establishment of a ProSe link;
establishment of the QoS flow;
change in a QoS attribute parameter;
a time condition of the ProSe link, where the time condition of the ProSe link is used to represent that a charging event is triggered in a case that a set time is met within a life period of the ProSe link;
a data volume condition of the ProSe link, where the data volume condition of the ProSe link is used to represent that a charging event is triggered in a case that a set data volume is met within the life period of the ProSe link;
a time condition of the QoS flow, where the time condition of the QoS flow is used to represent that a charging event is triggered in a case that a set time is met within a life period of the QoS flow;
a data volume condition of the QoS flow, where the data volume condition of the QoS flow is used to represent that a charging event is triggered in a case that a set data volume is met within the life period of the QoS flow.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the processor is further configured to read the computer program in the memory to perform the following operations: after acquiring the charging information, generating a usage information report including the charging information according to a collection period for generating the usage information report included in configuration information. The transmitting, by the transceiver, the charging information to the network-side equipment includes: transmitting the usage information report to the network-side equipment according to a reporting period in the configuration information.

Optionally, the transmitting, by the transceiver, the charging information to the network-side equipment includes: transmitting the charging information to a charging trigger function (CTF) or a charging enablement function (CEF) of the network-side equipment, where the charging information is forwarded to a CHF by the CTF or the CEF, and the charging information is used for the CHF to charge for the ProSe that occurs.

Optionally, the transmitting, by the transceiver, the charging information to the CEF of the network-side equipment specifically includes: transmit the charging information to the CEF of the network-side equipment through a charging related network function (NF) service.

Optionally, the flow information of the QoS flow includes at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

In the embodiment of the present application, the UE acquires the charging information of the QoS flow and reports it to the network-side equipment, and the network-side equipment reports the charging information to CHF, so as to complete the charging. This solution can achieve the charging based on the traffic of ProSe services, and can satisfy charging scenarios of various potential vertical services in ProSe.

It should be noted that in FIG. 15, a bus architecture may include any quantity of interconnected buses and bridges, and connects various circuits including one or more processors represented by the processor 1510 and memory represented by the memory 1520. The bus architecture may also connect various other circuits such as peripherals, voltage regulators and power management circuits, which is well known in the art. Therefore, a detailed description thereof is omitted herein. A bus interface provides an interface. The transceiver 1500 may be multiple elements, i.e., a transmitter and a receiver, to allow for communication with various other apparatuses on the transmission medium. For different terminals, the user interface 1530 may be an interface capable of externally or internally connecting a required device, and the connected device includes, but is not limited to: a keypad, a display, a speaker, a microphone, a joystick and the like. The processor 1510 is responsible for supervising the bus architecture and normal operation and the memory 1520 may store the data being used by the processor 1510 during operation.

Optionally, the processor 1510 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any of the methods provided in the embodiments of the present application according to the obtained executable instructions by calling a computer program stored in the memory. The processor and memory may also be arranged to be separated physically.

It should be noted that the above user equipment provided in the embodiments of the present application can implement all method steps in the method implemented in the above method embodiments applied to the user equipment, and can achieve the same technical effects. Therefore, the description and beneficial effects of this embedment that are the same as those of the method embodiments will not be further elaborated in detail.

The user equipment involved in the embodiments of the present application may be a device that provides voice and/or data connectivity to a user, a handheld device with a radio connection function, or other processing devices connected to a radio modem or the like. The user equipment, such as a terminal device, includes a wireless terminal device. The wireless terminal device can communicate with one or more core networks (Core Network, CN) via a radio access network (Radio Access Network, RAN), and wireless terminal device may be mobile terminal device, such as mobile phones (or referred to as "cellular" phones) and computers with mobile terminal device, such as portable, pocket-sized, hand-held, computer built-in or vehicle-mounted mobile apparatuses, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal device may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present application.

As shown in FIG. 16, an embodiment of the present application further provides a network-side equipment, which includes: a memory 1620, a transceiver 1600 and a processor 1610. The memory 1620 is configured to store a computer program; a transceiver 1600 is configured to transmit and receive data under the control of the processor 1610.

The transceiver 1600 is configured to perform the following operations: acquiring charging information of a QoS flow transmitted by a user equipment, where the charging information is generated based on a proximity based service (ProSe) provided by the user equipment; and transmitting the charging information to a charging function (CHF), where the charging information includes flow information of the QoS flow and/or link information associated with the QoS flow.

Optionally, the processor 1610 is configured to read the computer program in the memory to perform following operations: configure configuration information about the charging information for the user equipment.

Optionally, the configuration information includes at least one or more of the following:
a collection period for generating a usage information report based on the charging information;
a reporting period for reporting the charging information;
a first indication information, where the first indication information is used to indicate whether to report the charging information based on the QoS flow;
a second indication information, where the second indication information is used to indicate whether to report a data volume of received data;
a third indication information, where the third indication information is used to indicate whether to report a data volume of transmitted data.

Optionally, the transmitting, by the transceiver, the charging information of the QoS flow transmitted by the user equipment includes: acquiring a usage information report transmitted by the user equipment according to a reporting period of the charging information, where the usage information report includes the charging information.

Optionally, when the transceiver acquires the charging information transmitted by the user equipment, the transceiver is specifically configured to receive the charging information transmitted by the user equipment to a charging trigger function (CTF) or a charging enablement function (CEF) of the network-side equipment. The transmitting, by the transceiver, the charging information to a charging function (CHF) includes: transmitting the charging information to the CHF through the CTF or the CEF by using a service-based interface exhibited by charging function (Nchf), where the charging information is used for the CHF to charge for the ProSe that occurs.

Optionally, the receiving, by the transceiver, the charging information transmitted by the user equipment to the charging enablement function (CEF) includes: receiving the charging information transmitted by a NF service to the CEF, where the charging information is transmitted by the user equipment to the NF service.

Optionally, the flow information of the QoS flow includes at least one or more of the following:
a QoS attribute parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

Optionally, the charging information further includes link information associated with the QoS flow, where the link information includes at least one or more of the following:
a source IP address;
a target IP address;
a relay IP address;
an IP multicast address of a ProSe group;
an identifier of a device participating in the ProSe;
a link identifier of a ProSe link.

In the embodiment of the present application, the UE acquires the charging information of the QoS flow and reports it to the network-side equipment, and the network-side equipment reports the charging information to CHF, so as to complete the charging. This solution can achieve the charging based on the traffic of ProSe services, and can satisfy charging scenarios of various potential vertical services in ProSe.

In FIG. 16, a bus architecture may include any quantity of interconnected buses and bridges, and connects various circuits including one or more processors represented by the processor 1610 and memory represented by the memory 1620. The bus architecture may also connect various other circuits such as peripherals, voltage regulators and power management circuits, which is well known in the art. Therefore, a detailed description thereof is omitted herein. A bus interface provides an interface. The transceiver 1600 may be multiple elements, i.e., a transmitter and a receiver, to allow for communication with various other apparatuses on the transmission medium. The processor 1610 is responsible for supervising the bus architecture and normal operation and the memory 1620 may store the data being used by the processor 1610 during operation.

The processor 1610 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above network-side equipment provided in the embodiment of the present application is capable of implementing all steps of the method implemented in the above method embodiments applied to the network-side equipment, and is capable of achieving the same technical effects. Therefore, the parts and beneficial effects of this embedment that are the same as the method embodiments will not be further elaborated herein in detail.

The network-side equipment involved in the embodiments of the present application, such as a core domain (CN Domain) in a charging architecture, may also be a service network (Service NE) in a charging architecture with distributed CTF functional modules, which are not limited thereto.

In addition, a specific embodiment of the present application further provides a processor readable storage medium, where the processor readable storage medium stores a computer program. The computer program is executed by the processor to implement steps in the above charging method. The readable storage medium may be any available medium or data storage device that can be accessed by the processor, including but not limited to magnetic storage (such as floppy disk, hard disk, magnetic tape, magneto-optical disk (Magneto-Optical Disk, MO)), optical storage (such as compact disc (Compact Disk, CD), digital versatile disc (Digital Versatile Disc, DVD), blue-ray disc (Blu-ray Disc, BD), high-definition versatile disc (High-Definition Versatile Disc, HVD)), and semiconductor memory (such as read-only memory (Read-Only Memory, ROM), erasable programmable ROM (Erasable Programmable ROM, EPROM), electrically EPROM (Electrically EPROM, EEPROM), non-volatile memory (NAND FLASH), solid-state drive (Solid State Disk or Solid State Drive, SSD)), etc.

Those skilled in the art should appreciate that the embodiments of the present application may be provided as a method, a system, or a computer program product. Therefore, the present application may take the form of complete hardware embodiments, complete software embodiments, or embodiments combining software and hardware. Moreover, the present application may take the form of a computer program product implemented on one or more computer available storage media (including but not limited to disk storage, optical storage, etc.) including a computer available program code.

The present application is described with reference to the flow chart and/or the block diagram of the method, device (system), and computer program product according to the embodiments of the present application. It should be appreciated that each of processes and/or boxes in a flow chart and/or block diagram, and a combination of the processes and/or boxes in the flow chart and/or block diagram may be implemented by computer executable instructions. These computer executable instructions may be provided to a processor of a general-purpose computer, a specialized computer, an embedded processing device, or other programmable data processing devices to generate a machine that generates instructions executed by the processor of computer or other programmable data processing devices to implement functions specified in one or more processes and/or blocks in a flow chart.

These processor executable instructions may also be stored in processor-readable memory that may guide computers or other programmable data processing devices to work in a specific way, causing the instructions stored in the processor readable memory to generate a manufacturing product including instruction devices that implement the functions specified in one or more processes and/or blocks of a flow chart.

These processor executable instructions may also be loaded onto a computer or other programmable data processing device, enabling a series of operational steps to be performed on the computer or other programmable device to generate computer-implemented processing. Thus, instructions executed on computers or other programmable devices provide steps for implementing functions specified in one or more processes and/or boxes of a flow chart.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the embodiment of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present application without departing from the spirit and scope of the present application. In this way, if these modifications and variations of the present application fall within the scope of the claims and their equivalent technologies, the present application also intends to include these modifications and variations.

## Claims

1. A charging method, comprising:
acquiring, by a user equipment, charging information of a quality of service (QoS) flow, wherein the charging information is generated based on a proximity based service (ProSe) provided by the user equipment; and
transmitting the charging information to a network-side equipment,
wherein the charging information comprises flow information of the QoS flow.

2. The method according to claim 1, wherein the acquiring the charging information of the quality of service (QoS) flow comprises:
acquiring the charging information of the QoS flow based on a charging trigger event;
and/or,
triggering to acquire the charging information of the QoS flow based on configuration information.

3. The method according to claim 2, wherein the charging trigger event comprises at least one or more of the following:
establishment of a ProSe link;
establishment of the QoS flow;
change in a QoS attribute parameter;
a time condition of a ProSe link, wherein the time condition of the ProSe link is used to represent that a charging event is triggered in a case that a set time is met within a life period of the ProSe link;
a data volume condition of the ProSe link, wherein the data volume condition of the ProSe link is used to represent that a charging event is triggered in a case that a set data volume is met within a life period of the ProSe link;
a time condition of the QoS flow, wherein the time condition of the QoS flow is used to represent that a charging event is triggered in a case that a set time is met within a life period of the QoS flow;
a data volume condition of the QoS flow, wherein the data volume condition of the QoS flow is used to represent that a charging event is triggered in a case that a set data volume is met within a life period of the QoS flow.

4. The method according to claim 2, wherein the configuration information comprises at least one or more of the following:
a collection period for generating a usage information report based on the charging information;
a reporting period for reporting the charging information;
a first indication information, wherein the first indication information is used to indicate whether to report the charging information based on the QoS flow;
a second indication information, wherein the second indication information is used to indicate whether to report a data volume of received data;
a third indication information, wherein the third indication information is used to indicate whether to report a data volume of transmitted data.

5. The method according to claim 1, further comprising:
after acquiring the charging information, generating a usage information report comprising the charging information according to a collection period for generating the usage information report comprised in configuration information;
wherein the transmitting the charging information to the network-side equipment comprises:
transmitting the usage information report to the network-side equipment according to a reporting period in the configuration information.

6. The method according to claim 1, wherein the transmitting the charging information to the network-side equipment comprises:
transmitting the charging information to a charging trigger function (CTF) or a charging enablement function (CEF) of the network-side equipment, wherein the charging information is forwarded to a CHF by the CTF or the CEF,
wherein the charging information is used for the CHF to charge for the ProSe that occurs.

7. The method according to claim 6, wherein the transmitting the charging information to the CEF of the network-side equipment comprises:
transmitting the charging information to the CEF of the network-side equipment through a charging related network function (NF) service.

8. The method according to claim 1, wherein the flow information of the QoS flow comprises at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

9. The method according to claim 1, wherein the charging information further comprises link information associated with the QoS flow, wherein the link information comprises at least one or more of the following:
a source IP address;
a target IP address;
a relay IP address;
an IP multicast address of a ProSe group;
an identifier of a device participating in the ProSe;
a link identifier of a ProSe link.

10. A charging method, comprising:
acquiring, by a network-side equipment, charging information of a QoS flow transmitted by a user equipment, wherein the charging information is generated based on a proximity based service (ProSe) provided by the user equipment; and
transmitting the charging information to a charging function (CHF),
wherein the charging information comprises flow information of the QoS flow.

11. The method according to claim 10, wherein before acquiring the charging information of the QoS flow transmitted by the user equipment, the method further comprises:
configuring configuration information about the charging information for the user equipment.

12. The method according to claim 11, wherein the configuration information comprises at least one or more of the following:
a collection period for generating a usage information report based on the charging information;
a reporting period for reporting the charging information;
a first indication information, wherein the first indication information is used to indicate whether to report the charging information based on the QoS flow;
a second indication information, wherein the second indication information is used to indicate whether to report a data volume of received data;
a third indication information, wherein the third indication information is used to indicate whether to report a data volume of transmitted data.

13. The method according to claim 10, wherein the acquiring the charging information of the QoS flow transmitted by the user equipment comprises:
acquiring a usage information report transmitted by the user equipment according to a reporting period of the charging information, wherein the usage information report comprises the charging information.

14. The method according to claim 10, wherein the transmitting the charging information to the charging function (CHF) comprises:
transmitting the charging information to the CHF through a charging trigger function (CTF) or a charging enablement function (CEF) by using a service-based interface exhibited by charging function (Nchf),
wherein the charging information is used for the CHF to charge for the ProSe that occurs.

15. The method according to claim 10, wherein the flow information of the QoS flow comprises at least one or more of the following:
a QoS parameter;
a QoS characteristic parameter;
PFI;
a transmission time of a first packet of a service data flow that matches the PFI;
a transmission time of a last packet of the service data flow that matches the PFI;
a time when the QoS flow occurs;
an identifier of a serving network function.

16. A user equipment, comprising: a memory, a transceiver and a processor, wherein:
the memory is configured to store a computer program; the transceiver is configured to transmit and receive data under control of the processor; and the processor is configured to read the computer program in the memory to perform the following operation: acquiring charging information of a quality of service (QoS) flow, wherein the charging information is generated based on a proximity based service (ProSe) provided by the user equipment;
the transceiver is configured to transmit the charging information to a network-side equipment,
wherein the charging information comprises flow information of the QoS flow.

17. The user equipment according to claim 16, wherein the processor is configured to read the computer program in the memory to perform the following operations:
acquiring the charging information of the QoS flow based on a charging trigger event; or,
triggering to acquire the charging information of the QoS flow based on configuration information.

18. The user equipment according to claim 17, wherein the charging trigger event comprises at least one or more of the following:
establishment of a ProSe link;
establishment of the QoS flow;
change in a QoS attribute parameter;
a time condition of a ProSe link, wherein the time condition of the ProSe link is used to represent that a charging event is triggered in a case that a set time is met within a life period of the ProSe link;
a data volume condition of the ProSe link, wherein the data volume condition of the ProSe link is used to represent that a charging event is triggered in a case that a set data volume is met within a life period of the ProSe link;
a time condition of the QoS flow, wherein the time condition of the QoS flow is used to represent that a charging event is triggered in a case that a set time is met within a life period of the QoS flow;
a data volume condition of the QoS flow, wherein the data volume condition of the QoS flow is used to represent that a charging event is triggered in a case that a set data volume is met within a life period of the QoS flow.

19. The user equipment according to claim 17, wherein the configuration information comprises at least one or more of the following:
a collection period for generating a usage information report based on the charging information;
a reporting period for reporting the charging information;
a first indication information, wherein the first indication information is used to indicate whether to report the charging information based on the QoS flow;
a second indication information, wherein the second indication information is used to indicate whether to report a data volume of received data;
a third indication information, wherein the third indication information is used to indicate whether to report a data volume of transmitted data.

20. The user equipment according to claim 16, wherein the processor is further configured to read the computer program in the memory to perform the following operations:
after acquiring the charging information, generating a usage information report comprising the charging information according to a collection period for generating the usage information report comprised in configuration information;
the transceiver transmitting the charging information to the network-side equipment comprises:
transmitting the usage information report to the network-side equipment according to a reporting period in the configuration information.

21. The user equipment according to claim 16, wherein the transceiver transmitting the charging information to the network-side equipment comprises:
transmitting the charging information to a charging trigger function (CTF) or a charging enablement function (CEF) of the network-side equipment, wherein the charging information is forwarded to a CHF by the CTF or the CEF,
wherein the charging information is used for the CHF to charge for the ProSe that occurs.

22. The user equipment according to claim 16, wherein the flow information of the QoS flow comprises at least one or more of the following:
a QoS attribute parameter;
a QoS characteristic parameter;
a QoS flow identifier (PFI);
a transmission time of a first packet of a service data flow that matches the PFI;
a transmission time of a last packet of the service data flow that matches the PFI;
a time when the QoS flow occurs;
an identifier of a serving network function.

23. The user equipment according to claim 16, wherein the charging information further comprises link information associated with the QoS flow, wherein the link information comprises at least one or more of the following:
a source IP address;
a target IP address;
a relay IP address;
an IP multicast address of a ProSe group;
an identifier of a device participating in the ProSe;
a link identifier of a ProSe link.

24. A network-side equipment, comprising: a memory, a transceiver and a processor, wherein:
the memory is configured to store a computer program; the transceiver is configured to transmit and receive data under control of the processor; and the processor is configured to read the computer program;
wherein the transceiver is configured to perform the following operations:
acquiring charging information of a QoS flow transmitted by a user equipment, wherein the charging information is generated based on a proximity based service (ProSe) provided by the user equipment; and
transmitting the charging information to a charging function (CHF),
wherein the charging information comprises flow information of the QoS flow.

25. A charging apparatus, comprising:
a first acquiring unit, configured to acquire charging information of a quality of service (QoS) flow, wherein the charging information is generated based on a proximity based service (ProSe) provided by a user equipment; and
a first transmitting unit, configured to transmit the charging information to a network-side equipment,
wherein the charging information comprises flow information of the QoS flow.

26. A charging apparatus, comprising:
a second acquiring unit, configured to acquire charging information of a QoS flow transmitted by a user equipment, wherein the charging information is generated based on a proximity based service (ProSe) provided by the user equipment; and
a second transmitting unit, configured to transmit the charging information to a charging function (CHF),
wherein the charging information comprises flow information of the QoS flow.

27. A computer readable storage medium, wherein the computer readable storage medium stores a computer program, and the computer program is configured to be executed by a processor to perform steps in the method according to any one of claims 1 to 15.
